# DEMANDE DE BREVET EUROPEEN

(11) **EP 2 637 011 A1**
(43) Date de publication de la demande: **11.09.2013**
(21) Numéro de dépôt: 12290084.8
(22) Date de dépôt: 09.03.2012
(51) Int. Cl.: G01M 11/02, G01B 11/24

(54) **Procédé et appareil de mesure de la structure géométrique d'un composant optique**

(71) Demandeur: Essilor International, 94220 Charenton Le Pont (FR)
(72) Inventeur: Gueu, Stephane, 94200 Charenton Le Pont (FR); Lavillonniere, Nicolas, 94200 Charenton Le Pont (FR); Muradore, Fabien, 94200 Charenton Le Pont (FR); Lakhoua, Asma, 94200 Charenton Le Pont (FR)
(74) Mandataire: Yquel, Vincent Gérard

(57) **Abrégé**

La présente invention a pour objet un procédé et un système de mesure de la structure géométrique ou optique d'un composant optique.

En particulier, l'invention concerne un procédé de mesure de la structure géométrique d'un composant délimité par une première face (10) et une deuxième face (20); ledit procédé comprenant les étapes de:
- (S1) Mesure d'un premier signal (MS1) résultant d'une première transformation d'un premier signal sonde (PS1) par au moins ladite première face (10);
- (52) Mesure d'un deuxième signal (MS2) résultant d'une deuxième transformation d'un deuxième signal sonde (PS2) par au moins ladite deuxième face (20) ;
- (S3) Détermination d'une troisième transformation permettant de passer d'un premier repère (R1) lié à la mesure du premier signal (MS1) à un deuxième repère (R2) lié à la mesure du deuxième signal (MS2) ;
- (S10) Estimation de ladite première face (10) réalisée à partir du premier signal (MS1), de ladite première simulation et d'un premier critère de coût (V1) quantifiant un écart entre l'estimation (ES1) et le premier signal (MS1);
- (S20) Estimation de ladite deuxième face (20) réalisée à partir du deuxième signal (MS2), de ladite deuxième simulation, de ladite troisième transformation et d'un deuxième critère de coût (V2) quantifiant un écart entre l'estimation (ES2) et le deuxième signal (MS2).

## Description

### Domaine de l'invention

La présente invention a pour objet un procédé et un système de mesure de la structure géométrique ou optique d'un composant optique.

Le procédé selon l'invention permet de mesurer de façon absolue les deux faces d'un composant optique. On entend par mesure absolue une mesure qui ne nécessite aucune connaissance préalable du composant hormis son indice de réfraction. La mesure de faces est susceptible de nombreuses applications industrielles. Elle est notamment utile dans le domaine ophtalmique pour le contrôle ou la mesure de lentilles ophtalmiques; dans ce cas, la réalisation de faces complexes nécessite la détermination simultanée de centaines de coefficients.

### Arrière plan de l'invention

Cette section est destinée à introduire le lecteur aux divers aspects de l'art, qui peuvent être liés à différents aspects de la présente invention qui sont décrits et / ou revendiqués ci-dessous. Cette discussion est considérée comme utile pour fournir au lecteur des informations d'arrière-plan afin de faciliter une meilleure compréhension des différents aspects de la présente invention. En conséquence, il doit être entendu que ces déclarations doivent être lues à cette lumière, et non comme un exposé de l'art antérieur.

EP-A-0 644 411 au nom de la demanderesse décrit un appareil de déflectométrie en réflexion ou en transmission. Cet appareil permet la mesure par réflexion ou transmission de la structure géométrique d'un composant optique. Le principe d'un tel appareil de mesure est d'éclairer le composant optique à mesurer par un rayonnement de front d'onde connue - dans le cas le plus simple une onde plane - et de mesurer le front d'onde après réflexion ou transmission sur le composant optique à mesurer. La mesure du front d'onde après réflexion ou transmission permet de remonter aux caractéristiques géométriques du composant à mesurer.

On sait ainsi déterminer la géométrie d'une face du composant; la géométrie de l'autre face du composant étant supposée connue pour les calculs. Il existe donc un besoin d'un appareil de mesure, qui permette de déterminer les différentes caractéristiques d'un composant optique, et notamment de ses deux faces. Un tel appareil permet notamment de mesurer efficacement des lentilles ophtalmiques progressives, en déterminant de façon exacte la forme de chacune de leurs deux faces et en positionnant parfaitement une face par rapport à l'autre sans avoir à formuler d'hypothèse sur l'une de ces faces.

Par ailleurs, on sait mesurer les faces d'un composant optique à l'aide d'un palpeur mécanique fonctionnant face par face. Mais la durée d'une mesure d'une face est importante et il reste toujours difficile de positionner la mesure de la première face par rapport à la deuxième face.

### Résumé de l'invention

La présente invention a pour but de résoudre les inconvénients précités et propose de déterminer la structure d'un composant à partir de 2 mesures non destructives réalisées chacune sur au moins une des faces, chacune de ces faces est inconnue a priori. Cette détermination est en outre fondée sur une reconstruction numérique de chacune des faces du composant à partir desdites mesures.

L'invention atteint ce but grâce aux caractéristiques de la revendication 1, selon un premier aspect et grâce aux caractéristiques de la revendication 14, selon un deuxième aspect.

Les revendications secondaires présentent des conceptions avantageuses et des perfectionnements de l'invention.

Selon le premier aspect, l'invention concerne un procédé de mesure de la structure géométrique d'un composant délimité par une première face 10 et une deuxième face 20; ledit procédé comprenant les étapes de:
S1 Mesure d'un premier signal MS1 résultant d'une première transformation d'un premier signal sonde PS1 par au moins ladite première face 10, une première simulation de ladite première transformation permettant d'obtenir une première estimation ES1 du signal résultant de ladite première transformation du premier signal sonde PS1 par au moins une première face virtuelle 11 connue et positionnée dans un premier repère de mesure R1 de manière identique à ladite première face 10 lors de la mesure du premier signal MS1;
S2 Mesure d'un deuxième signal MS2 résultant d'une deuxième transformation d'un deuxième signal sonde PS2 par au moins ladite deuxième face 20, une deuxième simulation de ladite deuxième transformation permettant d'obtenir une deuxième estimation ES2 du signal résultant de ladite deuxième transformation du deuxième signal sonde PS2 par au moins une deuxième face virtuelle 21 connue et positionnée dans un deuxième repère de mesure R2 de manière identique à ladite deuxième face 20 lors de la mesure du deuxième signal MS2;
S3 Détermination d'une troisième transformation permettant de passer du premier repère R1 au deuxième repère R2 ;
S10 Estimation de ladite première face 10 réalisée à partir du premier signal MS1, de ladite première simulation et d'une première fonction coût V1 quantifiant un écart entre l'estimation ES1 et le premier signal MS1;
S20 Estimation de ladite deuxième face 20 réalisée à partir du deuxième signal MS2, de ladite deuxième simulation, de ladite troisième transformation et d'une deuxième fonction coût V2 quantifiant un écart entre l'estimation ES2 et le deuxième signal MS2.

Selon le deuxième aspect, l'invention concerne un système de mesure de la structure géométrique d'un composant délimité par une première face 10 et une deuxième face 20; ledit système comportant:
un premier moyen de mesure MM1 d'un premier signal MS1 résultant d'une première transformation d'un premier signal sonde PS1 par au moins ladite première face 10, une première simulation de ladite première transformation permettant d'obtenir une première estimation ES1 du signal résultant de ladite première transformation du premier signal sonde PS1 par au moins une première face 11 virtuelle connue et positionnée dans un premier repère de mesure R1 de manière identique à ladite première face 10 lors de la mesure du premier signal MS1;
un deuxième moyen de mesure MM2 d'un deuxième signal MS2 résultant d'une deuxième transformation d'un deuxième signal sonde PS2 par au moins ladite deuxième face 20, une deuxième simulation de ladite deuxième transformation permettant d'obtenir une deuxième estimation ES2 du signal résultant de ladite deuxième transformation du deuxième signal sonde PS2 par au moins une deuxième face 21 virtuelle connue et positionnée dans un premier repère de mesure R2 de manière identique à ladite deuxième face 20 lors de la mesure du deuxième signal MS2;
un moyen MD pour déterminer une troisième transformation permettant de passer du premier repère R1 au deuxième repère R2
   - un premier moyen de calcul CM1 configuré pour estimer ladite première face 10 à partir du premier signal MS1, de ladite première simulation, d'une première face 11 virtuelle et d'une première fonction coût V1 quantifiant un écart entre la première estimation ES1 et le premier signal MS1;
   - un deuxième moyen de calcul CM2 configuré pour estimer ladite deuxième face 20 à partir du deuxième signal MS2, de ladite deuxième simulation, d'une deuxième face 21 virtuelle, de ladite troisième transformation et d'une deuxième fonction coût V2 quantifiant un écart entre la deuxième estimation ES2 et le deuxième signal M52.

La méthode selon l'invention présente l'avantage de réaliser une détermination de la structure d'un composant qui est très rapide par rapport aux techniques de mesure mécaniques directes existantes.

Par ailleurs, il est possible de mettre en oeuvre la méthode selon l'invention en employant deux mesures réalisées sur chacune des faces qui sont de nature très différente. La première mesure est par exemple une mesure en réflexion, la seconde mesure est réalisée par exemple en transmission. Mais d'autres géométries sont possibles comme réflexion/réflexion ou transmission/transmission. De même, la première mesure est une mesure de défléctométrie par réflexion de franges et la deuxième mesure est une mesure, du type Hartmann mais alternativement la première mesure peut aussi bien être une mesure de déformation d'un signal optique réfléchi par la première face et la deuxième mesure est une mesure de grossissement d'un signal optique transmis par la première et la deuxième face.

Ainsi, la methode selon l'invention présente également l'avantage de pouvoir être mise en oeuvre à partir d'équipements existant configurés pour réaliser des mesures de faces mais qui ne comprennent pas des moyens de calcul pour reconstruire ces faces dans un référentiel qui n'est pas lié à eux-même.

Un troisième avantage de la méthode selon l'invention est lié à la forme sous laquelle la détermination de la structure est produite : les étapes de reconstruction des faces présentées plus bas emploient une représentation des faces sous une forme analytique. En outre; la structure du composant telle qu'elle est délivrée par la méthode selon l'invention possède une forme analytique : ceci est particulièrement adaptée à l'emploi ultérieur de la structure estimée dans des moyens de simulations numériques.

Les différents modes de réalisation de l'invention trouvent des applications dans la mesure ou le contrôle de pièces usinées : par exemple des lentilles ophtalmiques. Dans ce cas, la réalisation de faces complexes nécessite la détermination simultanée de centaines de coefficients.

### Brève description des dessins

L'invention sera mieux comprise et illustrée au moyen des modes de réalisation et les exemples d'exécution suivants, nullement limitatifs, en référence aux figures annexées sur lesquelles:
Figure 1, montre l'ordinogramme d'une méthode de mesure selon un mode de réalisation de l'invention ;
Figure 2, présente un exemple de mesure d'un premier signal MS1 mise en oeuvre dans ladite méthode selon un mode de réalisation de l'invention ;
Figure 3 présente un exemple d'étape de mesure d'un deuxième signal MS2 mise en oeuvre dans ladite méthode selon un mode de réalisation de l'invention;
Figure 4 présente un exemple d'étape de détermination d'une troisième transformation mise en oeuvre dans ladite méthode selon un mode de réalisation de l'invention;
Figure 5, présente schématiquement un mode de réalisation d'un système de mesure de la structure d'un composant selon un mode de réalisation de l'invention.

### Description détaillée des modes de réalisation préférés

Il est entendu que les chiffres et les descriptions de la présente invention ont été simplifiés pour-illustrer les éléments qui sont pertinents pour une compréhension claire de la présente invention, tout en éliminant, à des fins de clarté, de nombreux autres éléments trouvés dans les procédés de mesure par reconstruction des faces d'un composant optique. Cependant, parce que ces éléments sont bien connus dans l'art antérieur, une discussion détaillée de ces éléments n'est pas prévue ici. La présente divulgation est dirigée vers toutes ces variations et les modifications connues de l'homme de l'art.

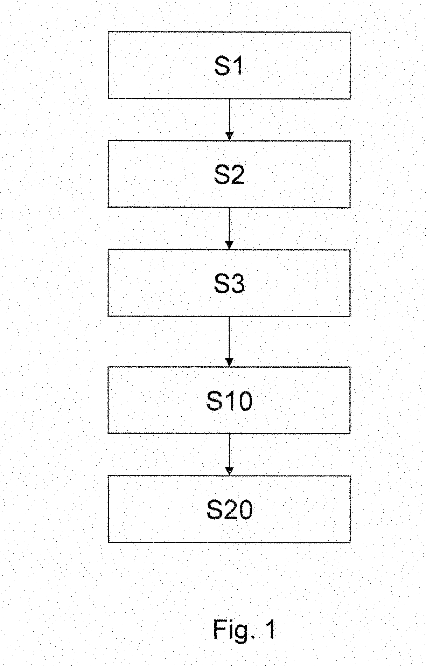

La figure 1 représente un ordinogramme comportant 5 étapes d'une méthode de mesure de la structure géométrique d'un composant selon un mode de réalisation de l'invention. Dans ce qui suit, ces cinq étapes sont explicitées et détaillées pour la mesure de la structure géométrique d'une lentille ophtalmique comportant une première face 10, par exemple convexe, et une deuxième face 20, par exemple concave.

Avantageusement, le composant est une lentille ophtalmique progressive.

### Etape S1: Mesure de la première face 10 par une méthode de réflexion de franges ;

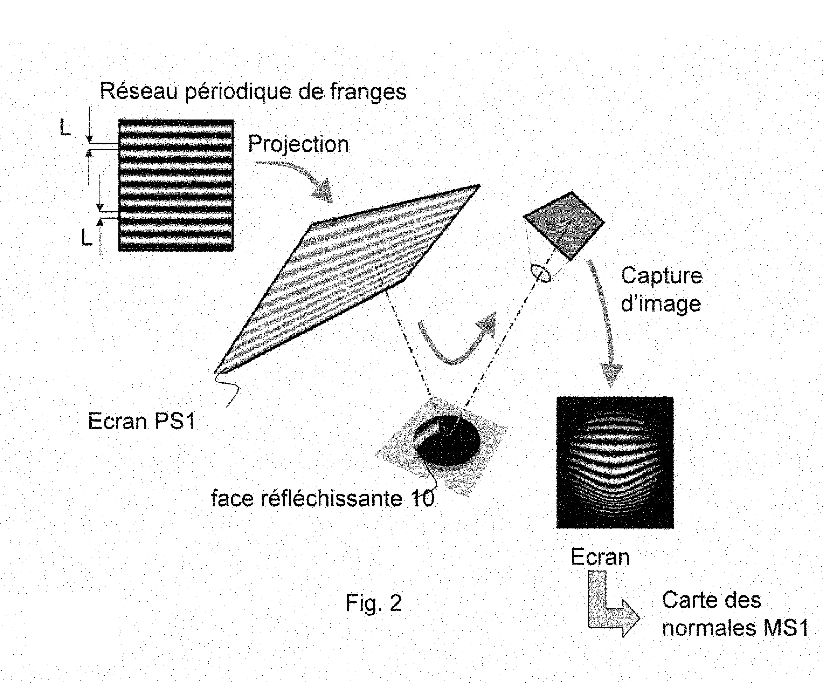

Comme représenté sur la figure 2, on projette sur la première face 10 du composant un réseau périodique de franges PS1, constitué par exemple par des bandes lumineuses de largeur L éclairées uniformément par de la lumière blanche et séparées par des bandes de largeur L non éclairées. Le réseau de franges est réfléchi par la face 10 et forme une image déformée du réseau. Cette image est capturée par un dispositif de capture d'image, par exemple une caméra numérique sensible à la lumière dans le spectre visible. Cette image (ou jeu de plusieurs images) est utilisée pour calculer une carte MS1 des directions normales à la face 10 en un nombre choisi de ses points. Ainsi la transformation T1 permet de passer du signal PS1 à une carte MS1 de normales « mesurées » de la face 10. Une simulation permet d'obtenir une première estimation ES1 des normales pour une face initiale connue. La carte MS1 des normales mesurées constitue la cible d'un problème de reconstruction qui est résolu par optimisation à l'étape ultérieure S10.

Bien entendu, la présente invention n'est pas limitée au mode de réalisation décrit à titre d'exemple; ainsi, on peut utiliser pour mesurer le première signal MS1 d'autres méthodes que la déflectométrie de frange en réflexion comme par exemple une méthode de déflectométrie par franges en projection ou en utilisant un réseau de Ronchi.

### Etape S2 : Mesure en transmission, au travers la première et la deuxième face par une méthode de type Hartmann :

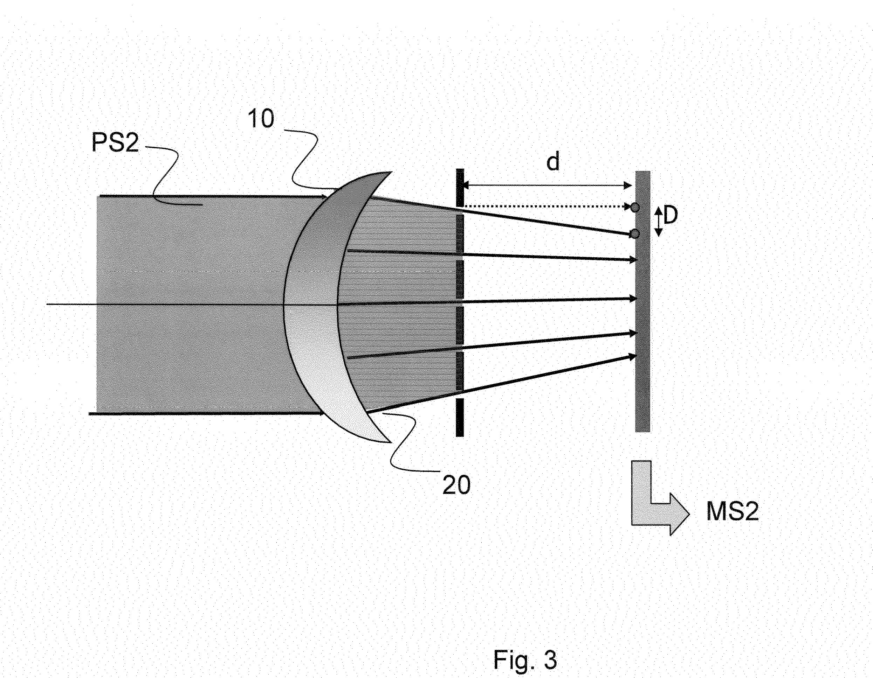

Comme représenté sur la figure 3, on envoie un faisceau optique à rayons parallèles PS2 au travers des faces 10 et 20 du composant à mesurer. Les rayons constituant le faisceau subissent une déviation liée à la réfraction aux deux interfaces 10, 20 du composant. Une partie des rayons ainsi déviés passe ensuite au travers une matrice d'ouvertures pour former des faisceaux secondaires qui sont enfin interceptés par un écran. Une image de l'écran est capturée par un dispositif de capture d'image, par exemple une caméra numérique sensible à la lumière dans le spectre visible, on acquiert les décalages des faisceaux secondaires traduits en déviations des rayons lumineux incidents caractéristiques de l'effet optique du composant mesuré. Par un traitement connu réalisé sur l'image capturée, on traduit ces décalages en une carte MS2 des normales au front d'onde transmis par le composant. Ainsi la transformation T2 permet de passer du signal PS2 à une carte MS2 de déviations « mesurées ».

La connaissance de la déviation des rayons est associée à une modélisation du comportement du système de mesure de type Hartmann. La simulation de la déviation des rayons lumineux par le composant mesuré permet d'obtenir des déviations pour un composant initial connu. La carte MS2 des déviations mesurées constitue la cible d'un problème de reconstruction qui est résolu par optimisation à l'étape ultérieure S20.

Bien entendu, la présente invention n'est pas limitée au mode de réalisation décrit à titre d'exemple; ainsi, on peut utiliser pour mesurer le deuxième signal MS2 d'autres méthodes que la déflectométrie de Hartmann en transmission comme par exemple une méthode de déflectométrie de Shack-Hartmann, par franges en transmission ou par Schlieren.

Dans un premier mode de réalisation, le premier signal MS1 résulte de la première transformation du premier signal sonde PS1 par ladite première face 10; et le deuxième signal MS2 résulte de la deuxième transformation du deuxième signal sonde PS2 par ladite première face 10 et ladite deuxième face 20.

Dans un deuxième mode de réalisation, le premier signal MS1 résulte de la première transformation du premier signal sonde PS1 par ladite première face 10 et ladite deuxième face 20; et le deuxième signal MS2 résulte de la deuxième transformation du deuxième signal sonde PS2 par ladite première face 10 et ladite deuxième face 20.

Dans un troisième mode de réalisation, le premier signal MS1 résulte de la première transformation du premier signal sonde PS1 par ladite première face 10; et le deuxième signal MS2 résulte de la deuxième transformation du deuxième signal sonde PS2 par ladite deuxième face 20.

Avantageusement, le premier et/ou le deuxième signal sonde (PS1, PS2) est un signal optique.

Avantageusement, le premier signal MS1 est une carte de normales à la première face 10 obtenue par mesure de déflectométrie d'un signal optique constitué par un réseau périodique réfléchi par la première face 10 et l'étape S2 de mesure du deuxième signal MS2 est une mesure déflectométrie d'un signal optique transmis par la première et la deuxième face 10, 20.

Avantageusement, : l'étape S1 de mesure du premier signal MS1 est une mesure de déformation d'un signal optique réfléchi par la première face 10 et l'étape 52 de mesure du deuxième signal MS2 est une mesure de grossissement d'un signal optique transmis par la première et la deuxième face 10, 20.

Avantageusement, les étapes de mesure S1, S2 sont mises en oeuvre par un unique équipement.

### Etape S3 ; Détermination d'une troisième transformation permettant de passer du premier repère R1 au deuxième repère R2

Lorsque la mesure du premier signal MS1 dans un repère R1 est réalisée en réflexion sur la première face 10, seule une reconstruction de la première face 10 est réalisable à partir de cette première mesure SM1. La mesure MS2 de la deuxième face est réalisée dans un repère R2. Il est nécessaire de connaître une transformation pour passer du repère R1 au repère R2. L'étape de reconstruction de la deuxième face 20 à partir d'une deuxième mesure MS2 réalisée en transmission ne permet en général pas à elle seule de positionner et d'orienter la deuxième face estimée (ou reconstruite) par rapport à la première face estimée. La connaissance d'une troisième transformation permettant de passer d'un premier repère R1 lié à la mesure du premier signal MS1 à un deuxième repère R2 lié à la mesure du deuxième signal MS2 est nécessaire pour y parvenir.

Par repère R1, R2 on entend ici repère d'un espace affine, défini par une origine et 3 directions indépendantes. La troisième transformation est donc une transformation affine qui peut donc être définie au moyen d'un vecteur qui sépare l'origine de R1 et l'origine de R2 et d'une matrice de rotation d'ordre 3 pour exprimer les rotations nécessaire pour passer des axes du repère R1 aux axes du repère R2.

Pour le présent mode de réalisation, la connaissance de la troisième transformation passe par une détermination indépendante de la mesure du premier et du deuxième signal MS2.

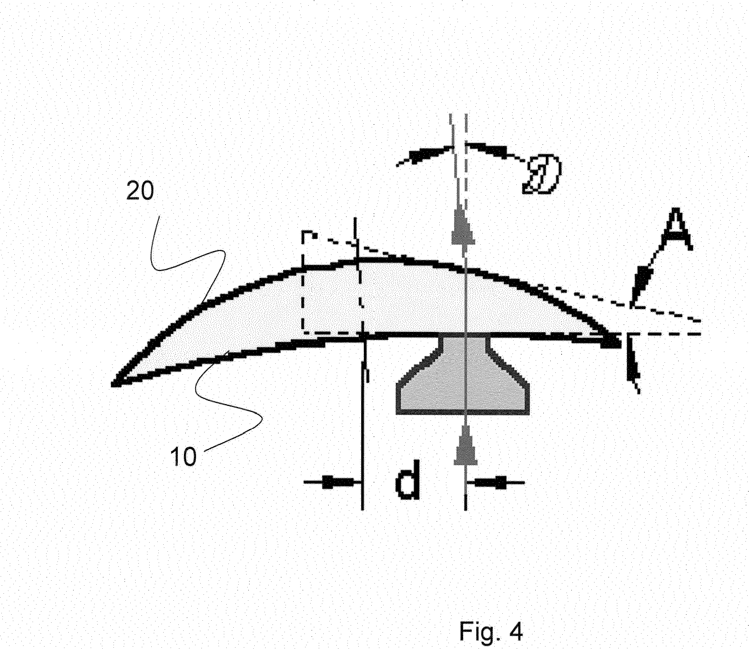

Comme représenté sur la figure 4, la troisième transformation peut être déterminée en un point de référence : l'épaisseur au centre du composant est mesurée par exemple à l'aide d'un système à palpage mécanique ou optique. Ceci permet de connaître la distance entre les faces 10 et 20 du composant en ce point de référence.

L'étape S3 dépend du type de mesure effectuée aux étapes S1 et S2.

En effet, si la mesure des étapes S1 et S2 concerne des attitudes (par exemple dans un palpage mécanique), les informations dont on dispose sont suffisantes pour reconstruire entièrement la face.

Si la mesure concerne des données d'ordre un (par exemple des normales, ou des déviations optiques), il y a une indétermination et la reconstruction ne peut avoir lieu sans donner l'altitude d'un point de la face (le problème de reconstruction a une infinité de solutions). Pour résoudre ce problème, une mesure de l'épaisseur au centre du composant permet de positionner dans l'espace la face à reconstruire.

Dans le cas d'une mesure d'ordre 2 (par exemple une mesure de courbure, ou de grandissement) il y a deux indéterminations. Il faut donner une altitude en un point de la face et une normale en un point de la face pour garantir l'unicité de la solution. Ainsi, on peut mesurer l'épaisseur au centre du composant pour déterminer l'altitude de la deuxième face, ainsi que le prisme du composant qui indiquera une normale à la deuxième face.

Si le prisme est mesuré par un moyen optique à l'aide d'un rayon incident normal à la première face, alors la mesure de prisme peut être directement traduite en transformation entre la première face et !a deuxième face. Si la mesure de prisme est effectuée par un rayon incident qui n'est pas normal à la première face, alors le prisme dépend de la deuxième face. Il faut donc reconstruire simultanément la deuxième face et l'orientation de la deuxième face dans l'espace (l'altitude étant donnée par la mesure de l'épaisseur centre). Dans cette dernière situation, l'étape S20 decrite plus bas, conduit à une détermination simultanée de la troisième transformation et de la deuxième face 20.

Bien entendu, la présente invention n'est pas limitée au mode de réalisation décrit à titre d'exemple; ainsi, on peut utiliser pour déterminer la troisième transformation d'autres méthodes que les méthodes optiques en transmission évoquées comme par exemple une méthode optique en réflexion, par palpage mécanique ou encore par palpage optique.

Les étapes de mesure S1, 52 sont réalisées sur des équipements de mesures différents. Cela rend nécessaire un référentiel de mesure commun pour positionner de façon absolue le composant dans l'espace. Pour le présent mode de réalisation, la première et la deuxième mesures peuvent être réalisées, chacune, à l'aide d'un système de pointé des micro-cercles portés sur l'une des faces du composant ou alternativement grâce un référentiel mécanique commun entre les systèmes de mesure qui garantit alors un positionnement dans un repère équivalent dans chacun d'entre eux. Pour ce faire, on utilise par exemple : une pince mécanique auto-centrée repérée dans l'espace.

Selon un mode de réalisation, l'étape (S3) de détermination de la troisième transformation comporte une mesure d'épaisseur du composant.

Selon un mode de réalisation, l'étape (S3) de détermination de la troisième transformation comporte en outre une mesure du prisme du composant.

### Etape S10 : Estimation de la première face 10 réalisée notamment à partir du premier signal MS1.

Une première reconstruction vise à estimer la première face 10 du composant. On considère une première face virtuelle 11 positionnée dans l'espace dans les mêmes conditions (position et orientation) que la première face 10 du composant physique lors de la mesure de déformation du réseau de franges. On appelle R1 le repère dans lequel est réalisée la mesure MS1 et dans lequel la position de la première face 10 et la position de la première face virtuelle 11 est connue.

Le principe d'une reconstruction par optimisation est connu en soi.

On définit des valeurs de départ pour la première face virtuelle 11, par exemple une forme sphérique. La simulation de la transformation du signal PS1 par la face virtuelle 11 permet de calculer une estimation ES1 des normales de la face virtuelle 11.

On définit ensuite une fonction coût V1, susceptible d'être calculée pour des valeurs courantes de la face virtuelle 11 du composant; cette fonction coût V1 est conçue pour présenter une valeur minimale ou maximale lorsque les valeurs de l'estimation ES1 de la mesure réalisée avec la face virtuelle 11 sont égales aux valeurs de la mesure MS1.

La valeur de la fonction coût permet de quantifier l'écart entre la simulation de la mesure ES1 et la mesure MS1. Pour chaque point de mesure, on peut considérer la norme du vecteur égal à la différence entre le vecteur indiquant la normale qui est issu de la mesure et le vecteur indiquant la normale qui est issu de la simulation. Une fonction coût peut être la somme quadratique des normes des vecteurs pour tous points de mesure.

Ensuite, un algorithme d'optimisation itératif modifie la face virtuelle 11 afin de faire diminuer la fonction coût V1. Par exemple on emploie un algorithme de moindres carrés tel que Gauss-Newton, ou Levenberg-Marquardt décrite dans « Numerical Optimization », Bonnas et al., Springer 2003. A chaque itération, l'algorithme propose une nouvelle face virtuelle 11; la simulation de la transformation T1 par cette nouvelle face virtuelle 11 permet de calculer une nouvelle valeur V1 de la fonction coût.

Le processus itératif est interrompu par exemple lorsque lorsque qu'un critère d'arrêt est vérifié par exemple lorsque la valeur prise par la fonction coût V1 ne peut plus être diminuée, ou bien lorsque la valeur de la fonction coût V1 est inférieure à un seuil donné. On a alors une face virtuelle 11 qui est une estimation correcte de la face 10 mesurée puisque l'écart entre la mesure et la simulation de cette mesure via la transformation T1 est réduite.

### Etape S20 : Estimation de la deuxième face 20 réalisée notamment à partir du premier slgnal MS2.

On constitue un composant virtuel, dont la première face est le résultat de la reconstruction de la première face 10 estimée à partir de la mesure MS1, et dont la deuxième face est une deuxième face virtuelle 21. La la troisième transformation déterminée à l'étape S3 est la loi de passage du repère R1 dans lequel est exprimé la première face estimée vers le repère R2 dans lequel est la position de la deuxième face 20 est repérée au cours de la mesure réalisée à l'étape 2. Cette troisième transformation permet de construire le composant virtuel dans l'espace et de le placer virtuellement dans les mêmes conditions que le composant (la pièce physique) au cours de la mesure réalisée à l'étape S2.

La simulation de la transformation T2 du signal PS2 par ce composant virtuel initial de calculer une estimation d'un deuxième signal, c'est-à-dire qu'on sait obtenir par le calcul une carte de déviation (des faisceaux secondaires du signal sond PS2) produites par le composant virtuel.

Pour chaque point de cette carte de déviation, on peut considérer la norme du vecteur égal à la différence entre le vecteur dévié mesuré et le vecteur dévié simulé. Une fonction coût peut être la somme quadratique de ces normes.

Ensuite, un algorithme d'optimisation itératif modifie la face virtuelle 21 du composant afin de faire diminuer la valeur de la fonction coût V2. Un algorithme de moindres carrés tel que Gauss-Newton, ou Levenberg-Marquardt (« Numerical Optimization », Bonnas et al., Springer, 2003) peut être utilisé dans ce but. A chaque itération, l'algorithme propose une nouvelle face virtuelle 21 ; la simulation de la transformation T2 par cette nouvelle face 21 permet de calculer une nouvelle valeur V2 de la fonction coût. Le processus itératif s'arrête par exemple lorsque la valeur de la fonction coût ne peut plus être diminuée, ou bien lorsque la valeur de la fonction coût est inférieure à un seuil donné. On a alors une face virtuelle 21 qui est une estimation E2 de la face 20 mesurée puisque l'écart entre la mesure et la simulation de cette mesure via la transformation T2 est faible.

Avantageusement, chaque étape d'estimation S10, S20 est itérative, chaque itération consistant à :
a Exécuter la simulation SIM1, SIM2 à partir d'au moins une face virtuelle 11, 21 et du signal sonde PS1 ; PS2 pour obtenir une estimation ES1, ES2 du signal mesuré ;
b Mesurer l'écart entre l'estimation ES1, ES2 calculée à l'étape a et le signal mesuré MS1; MS2 au moyen de la fonction coût V1, V2 ;
c Si un critère d'arrêt l'écart mesuré à l'étape b n'est pas vérifié, modifier la face virtuelle 11 ; 21 de manière à réduire ledit écart et revenir à l'étape a ;
d Estimer la face 10, 20 comme la valeur de la face virtuelle 11 ; 21 prise en compte à l'étape a de la présente itération.

Avantageusement, l'estimation 21 de ladite deuxième face 20 est obtenue en outre à partir de l'estimation 11 de ladite première face 10.

Avantageusement, les étapes d'estimation S10, S20 comportent une étape où la face virtuelle 11, 21 est exprimée sous une forme analytique. L'avantage constitué par cette étape est d'accélérer les calculs, et de fournir in fine une estimation de la structure géométrique du composant sous une forme aisément manipulable lors de calculs numériques ultérieurs.

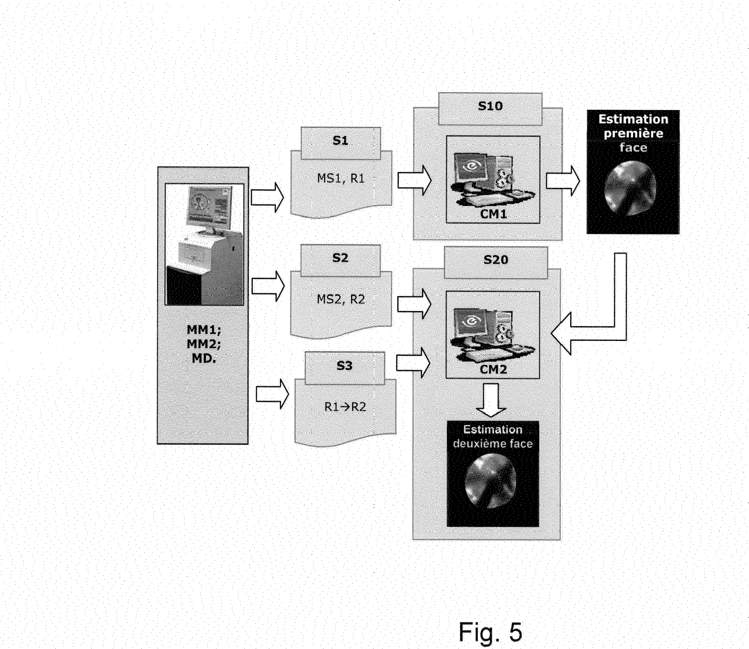

La figure 5 représente de façon schématique un système de mesure de la structure géométrique d'un composant délimité par une première face face10face et une deuxième face face20face; ledit système comportant
- un premier moyen de mesure MM1 d'un premier signal MS1 résultant d'une première transformation d'un premier signal sonde PS1 par au moins ladite première face 10, une première simulation de ladite première transformation permettant d'obtenir une première estimation ES1 du signal résultant de ladite première transformation du premier signal sonde P51 par au moins une première face 11 virtuelle connue et positionnée dans un premier repère de mesure R1 de manière identique à ladite première face 10 lors de la mesure du premier signal MS1;
- un deuxième moyen de mesure MM2 d'un deuxième signal MS2 résultant d'une deuxième transformation d'un deuxième signal sonde PS2 par au moins ladite deuxième face 20, une deuxième simulation de ladite deuxième transformation permettant d'obtenir une deuxième estimation E52 du signal résultant de ladite deuxième transformation du deuxième signal sonde PS2 par au moins une deuxième face 21 virtuelle connue et positionnée dans un premier repère de mesure R2 de manière identique à ladite deuxième face 20 lors de la mesure du deuxième signal MS2;
- un moyen MD pour déterminer une troisième transformation permettant de passer du premier repère R1 au deuxième repère R2
- un premier moyen de calcul CM1 configuré pour estimer ladite première face 10 à partir du premier signal MS1, de ladite première simulation, d'une première face 11 virtuelle et d'une première fonction coût V1 quantifiant un écart entre la première estimation ES1 et le premier signal MS1;
- un deuxième moyen de calcul CM2 configuré pour estimer ladite deuxième face 20 à partir du deuxième signal MS2, de ladite deuxième simulation, d'une deuxième face 21 virtuelle, de ladite troisième transformation et d'une deuxième fonction coût V2 quantifiant un écart entre la deuxième estimation ES2 et le deuxième signal MS2.

Dans l'exemple représenté sur la figure 5, l'estimation de la première surface 10 sert à l'estimation de la deuxième surface 20. Avantageusement, le premier moyen de calcul CM1 réalise une mesure de déformation d'un signal optique réfléchi par la première face 10; et le deuxième moyen de calcul CM2 réalise une mesure de grossissement d'un signal optique transmis par la première et la deuxième face 10, 20.

Avantageusement, un système selon un mode de réalisation de l'invention comporte des moyens de mesures MM1, MM2 d'un système de mesure optique configuré pour réaliser des mesure de faces 10, 20 d'un composant optique exprimé dans un repère propre audit système.

L'une des applications de cette mesure de la structure géométrique à une lentille ophtalmique peut être l'analyse comparative d'une lentille après usinage avec une pièce nominale par exemple pour étudier la conformité de la pièce produite.

Il faut définir pour cela un référentiel absolu commun à la lentille ophtalmique mesurée et à la pièce nominale. Pour ce faire, on ramène la lentille ophtalmique mesurée et la pièce nominale dans un référentiel commun, par exeple lié à la pièce où est réalisée la mesure. On détermine alors la position de la lentille ophtalmique mesurée et de la pièce nominale dans le référentiel de mesure soit par l'association d'un répère mécanique sur la lentille et la pièce, comme par exemple un méplat, soit par le pointage de marquages permanent sur la lentille et la pièce, du type micro-cercles.

Dans ce qui précède, la référence à « un mode de réalisation » signifie qu'une caractéristique particulière, la structure, ou une caractéristique décrite en relation avec le mode de réalisation peut être incluse dans au moins une mise en oeuvre de l'invention. Les apparitions de l'expression «dans un mode de réalisation" à divers endroits dans la description détaillée qui précède ne se référent pas nécessairement tous au même mode de réalisation. De même, des modes de réalisation distincts ou alternatifs ne sont pas nécessairement mutuellement exclusifs d'autres modes de réalisation.

## Revendications

1. Procédé de mesure de la structure géométrique d'un composant délimité par une première face (10) et une deuxième face (20); ledit procédé comprenant les étapes de:
- (S1) Mesure d'un premier signal (MS1) résultant d'une première transformation d'un premier signal sonde (PS1) par au moins ladite première face (10), une première simulation de ladite première transformation permettant d'obtenir une première estimation (ES1) du signal résultant de ladite première transformation du premier signal sonde (PS1) par au moins une première face virtuelle (11) connue et positionnée dans un premier repère de mesure (R1) de manière identique à ladite première face (10) lors de la mesure du premier signal (MS1);
- (S2) Mesure d'un deuxième signal (MS2) résultant d'une deuxième transformation d'un deuxième signal sonde (PS2) par au moins ladite deuxième face (20), une deuxième simulation de ladite deuxième transformation permettant d'obtenir une deuxième estimation (ES2) du signal résultant de ladite deuxième transformation du deuxième signal sonde (PS2) par au moins une deuxième face virtuelle (21) connue et positionnée dans un deuxième repère de mesure (R2) de manière identique à ladite deuxième face (20) lors de la mesure du deuxième signal (MS2) ;
- (S3) Détermination d'une troisième transformation permettant de passer du premier repère (R1) au deuxième repère (R2) ;
- (S10) Estimation de ladite première face (10) réalisée à partir du premier signal (MS1), de ladite première simulation et d'une première fonction coût (V1) quantifiant un écart entre la première estimation (ES1) et le premier signal (MS1);
- (S20) Estimation de ladite deuxième face (20) réalisée à partir du deuxième signal (MS2), de ladite deuxième simulation, de ladite troisième transformation et d'une deuxième fonction coût (V2) quantifiant un écart entre la deuxième estimation (ES2) et le deuxième signal (MS2).

2. Procédé selon la revendication 1, **caractérisé en ce que** :
- le premier signal (MS1) résulte de la première transformation du premier signal sonde (PS1) par ladite première face (10) ;
- le deuxième signal (MS2) résulte de la deuxième transformation du deuxième signal sonde (PS2) par ladite première face (10) et ladite deuxième face (20).

3. Procédé selon la revendication 1, **caractérisé en ce que** :
- le premier signal (MS1) résulte de la première transformation du premier signal sonde (PS1) par ladite première face (10) et ladite deuxième face (20);
- le deuxième signal (MS2) résulte de la deuxième transformation du deuxième signal sonde (PS2) par ladite première face (10) et ladite deuxième face (20).

4. Procédé selon la revendication 1, **caractérisé en ce que** :
- le premier signal (MS1) résulte de la première transformation du premier signal sonde (PS1) par ladite première face (10) ;
- le deuxième signal (MS2) résulte de la deuxième transformation du deuxième signal sonde (PS2) par ladite deuxième face (20).

5. procédé selon l'une des revendications 1 à 4, **caractérisé en ce que** chaque étape d'estimation (S10, S20) est itérative, chaque itération consistant à :
a) Exécuter la simulation (SIM1, SIM2) à partir d'au moins une face virtuelle (11, 21) et du signal sonde (PS1; PS2) pour obtenir une estimation (ES1, ES2) du signal mesuré ;
b) Mesurer l'écart entre l'estimation (ES1, ES2) calculée à l'étape a) et le signal mesuré (MS1; MS2) au moyen de la fonction coût (V1, V2) ;
c) Si un critère d'arrêt l'écart mesuré à l'étape b) n'est pas vérifié, modifier la face virtuelle (11; 21) de manière à réduire ledit écart et revenir à l'étape a) ;
d) Estimer !a face (10, 20) comme la valeur de la face virtuelle (11; 21) prise en compte à l'étape a) de la présente itération.

6. Procédé selon l'une des revendications 1 à 3, **caractérisé en ce que** ladite deuxième estimation (21) est obtenue en outre à partir de ladite première estimation (11).

7. Procédé selon l'une des revendications 1 à 6, **caractérisé en ce que** le premier et/ou le deuxième signal sonde (PS1, PS2) est un signal optique.

8. Procédé selon l'une des revendications 1 à 7, **caractérisé en ce que** :
- le premier signal (MS1) est une carte de normales à la première face (10) obtenue par mesure de déflectométrie d'un signal optique constitué par un réseau périodique réfléchi par la première face (10) ;
- L'étape (S2) de mesure du deuxième signal (MS2) est une mesure déflectométrie d'un signal optique transmis par la première et la deuxième face (10, 20).

9. Procédé selon l'une des revendications 1 à 7, **caractérisé en ce que** :
- L'étape (S1) de mesure du premier signal (MS1) est une mesure de déformation d'un signal optique réfléchi par la première face (10) ;
- L'étape (S2) de mesure du deuxième signal (MS2) est une mesure de grossissement d'un signal optique transmis par la première et la deuxième face (10, 20).

10. Procédé selon l'une des revendications 1 à 9, **caractérisé en ce que** l'étape (53) de détermination de la troisième transformation comporte une mesure d'épaisseur du composant.

11. Procédé selon la revendication 10, **caractérisé en ce que** l'étape (S3) de détermination de la troisième transformation comporte en outre une mesure du prisme du composant.

12. Procédé selon l'une des revendications 1 à 11, **caractérisé en ce que** les étapes de mesure (S1, S2) sont mises en oeuvre par un unique équipement.

13. Procédé selon l'une des revendications 1 à 12, **caractérisé en ce que** le composant est une lentille ophtalmique progressive.

14. Système de mesure de la structure géométrique d'un composant délimité par une première face (10) et une deuxième face (20); ledit système comportant :
- un premier moyen de mesure (MM1) d'un premier signal (MS1) résultant d'une première transformation d'un premier signal sonde (PS1) par au moins ladite première face (10), une première simulation de ladite première transformation permettant d'obtenir une première estimation (ES1) du signal résultant de ladite première transformation du premier signal sonde (PS1) par au moins une première face (11) virtuelle connue et positionnée dans un premier repère de mesure (R1) de manière identique à ladite première face (10) lors de la mesure du premier signal (MS1);
- un deuxième moyen de mesure (MM2) d'un deuxième signal (MS2) résultant d'une deuxième transformation d'un deuxième signal sonde (PS2) par au moins ladite deuxième face (20), une deuxième simulation de ladite deuxième transformation permettant d'obtenir une deuxième estimation (ES2) du signal résultant de ladite deuxième transformation du deuxième signal sonde (PS2) par au moins une deuxième face (21) virtuelle connue et positionnée dans un premier repère de mesure (R2) de manière identique à ladite deuxième face (20) lors de la mesure du deuxième signal (MS2);
- un moyen (MD) pour déterminer une troisième transformation permettant de passer du premier repère (R1) au deuxième repère (R2)
- un premier moyen de calcul (CM1) configuré pour estimer ladite première face (10) à partir du premier signal (MS1), de ladite première simulation, d'une première face (11) virtuelle et d'une première fonction coût (V1) quantifiant un écart entre la première estimation (ES1) et le premier signal (MS1);
- un deuxième moyen de calcul (CM2) configuré pour estimer ladite deuxième face (20) à partir du deuxième signal (MS2), de ladite deuxième simulation, d'une deuxième face (21) virtuelle, de ladite troisième transformation et d'une deuxième fonction coût (V2) quantifiant un écart entre la deuxième estimation (ES2) et le deuxième signal (MS2).

15. Système selon la revendication 14, **caractérisé en ce que** :
- le premier moyen de calcul (CM1) réalise une mesure de déformation d'un signal optique réfléchi par la première face (10) ; et
- le deuxième moyen de calcul (CM2) réalise une mesure de grossissement d'un signal optique transmis par la première et la deuxième face (10, 20).
